# EUROPÄISCHE PATENTANMELDUNG

(11) **EP 2 484 206 A1**
(43) Veröffentlichungstag der Anmeldung: **08.08.2012**
(21) Anmeldenummer: 12000681.2
(22) Anmeldetag: 01.02.2012
(51) Int. Cl.: A01K 1/015

(54) **Modifizierte Einstreupellets**

(30) Priorität: 03.02.2011 DE 202011002291 U
(71) Anmelder: Harnischmacher, Werner, Dr., 49078 Osnabrück (DE)
(72) Erfinder: Harnischmacher, Werner, Dr., 49078 Osnabrück (DE)
(74) Vertreter: Lenzing Gerber Stute

(57) **Zusammenfassung**

Die Erfindung betrifft Einstreupellets für Geflügelställe mit einem Zusatz eines die Ammoniakemission senkenden Salzes, wobei das Salz ausgewählt ist aus der Gruppe, die Dinatriummonohydrogenphosphat und Natriumpercarbonat umfasst.

## Beschreibung

Bislang wird bei der Geflügelzucht gehäckseltes Stroh als Einstreu in Mastanlagen verwendet. Grund dafür sind die niedrigen Kosten und eine als ausreichend erachtete Einbringbarkeit. Während der Aufstallungszeit wird damit eine als ausreichend hingenommene Sauberkeit der aufgestallten Tiere erreicht.

Festgestellt, aber mangels überzeugender Alternativen hingenommen, wird eine hohe Ammoniakemission der Ställe sowie Erkrankungen der Füße der Tiere und eine Belastung mit Salmonellen.

Es ist deshalb Aufgabe der vorliegenden Erfindung, die Ammoniakemission von Geflügelställen zu verringern und die Gesundheit der Tiere zu verbessern.

Um diese Aufgaben zu lösen, werden zwei Herangehensweisen 1. und 2. vorgeschlagen. Diese beiden Herangehensweisen sind Gegenstand der Erfindung.

### 1. Herangehensweise

Das entstehende Ammoniak wird chemisch zerstört, vorhandene Bakterien, die das Ammoniak produzieren, werden weitgehend zerstört. Das Verfahren wird weiter unten genauer beschrieben.

### 2. Herangehensweise

Das Ammoniak und das Klima des Bodensubstrats werden chemisch so beeinflusst, dass sich ein schwach saures Klima mit einer chemisch sicheren Bindung des entstandenen Ammoniaks paart. Das Verfahren wird weiter unten genauer beschrieben.

### Verfahren

Durch beide Maßnahmen wird die Emission (Freisetzung) von Ammoniak in die Atmosphäre verhindert. Für beide Maßnahmen wird der Weg über die sog. Anpelletierung genommen. Dabei ist es möglich, die eingebrachten Substanzen thermisch zu schonen (<30°C) und die mechanische Belastung der kristallinen Substanzen klein zu halten. Das Verfahren der Anpelletierung ist von der Firma Amandus Kahl GmbH & Co. KG (Reinbek, Deutschland) aus eben diesen Gründen entwickelt worden. Dieses Verfahren erlaubt danach die Einbringung des Produkts in die Stallungen per Luftdruck. Diese Handhabungsvereinfachung war uns wichtig zur besseren Durchsetzung der Verfahren.

### 1. Herangehensweise

Die beizumischende Substanz ist Natriumpercarbonat, ein kugelig kristallisierendes Salz aus Soda und Wasserstoffperoxid, thermisch instabil, möglichst nur unter 30°C zu verarbeiten. In Wärme und Feuchtigkeit zersetzt sich dieses Salz allmählich unter Abgabe von Sauerstoff. Dieser Sauerstoff "in statu nascendi" bewirkt eine Abtötung unliebsamer Mikroben und eine Oxidation etwaig gebildeten Ammoniums unter Bildung von Stickstoff und Wasser. Einen zu raschen Verbrauch der Kügelchen verhindert die Einbringung per Einarbeitung in die Strohpellets. Am Ende der Aufstallungszeit erhält man ein ammoniumarmes Substrat, das sich deshalb für die Biogaserzeugung eignet. Die notwendige Menge richtet sich vorrangig nach der Menge der einzusetzenden Pellets und der Art der aufgestallten Tiere. Der Anteil liegt zwischen 5-25% der Pelletmenge.

### 2. Herangehensweise

Die beizumischende Substanz ist Dinatriummonohydrogenphosphat, ein kristallines Salz der Phosphorsäure. Dinatriummonohydrogenphosphat kristallisiert üblicherweise mit 2 Kristallwasser. In wässriger Lösung oder unter Einwirkung von Feuchtigkeit reagiert diese Lösung sauer (pHS2). Unter den Einsatzbedingungen bewirkt dieses eine Verschiebung des chemischen Gleichgewichts in den schwach sauren Bereich. Das bedeutet eine Bindung des entstandenen Ammoniaks, eine Lebensverschlechterung für Mikroben, eine bessere Fußgesundheit des Geflügels. Die erforderliche Menge richtet sich nach der Pelletmenge, der Anteil liegt zwischen 1-10%. Am Ende der Aufstallungszeit erhält man ein Ammoniumsalz (als Phosphat) in angereicherter Menge. Damit ist dieses Substrat bestens als Düngemittel nutzbar.

In einem Vergleichsversuch mit Pellets, die nach dem ersten Verfahren mit Natriumpercarbonat versetzt waren, gegenüber unbehandelten Pellets wurden die nachfolgend in Tabellen dargestellten Messergebnisse erzielt. Dabei zeigt die Tabelle 1 Messungen in der Abluft eines Geflügelstalls in der Hähnchenaufzucht, der mit erfindungsgemäßen Pellets eingestreut ist, während die Tabelle 2 Messungen mit herkömmlichen Einstreupellets auf Strohbasis und mit unbehandeltem Stroh zeigt. Beide Tabellen zeigen die Messwerte in der Abluft nach 14 Tagen Aufstaltungszeit.

Der sich einstellende Effekt ist deutlich erkennbar. Mit erfindungsgemäßen Einstreupellets liegt der Mittelwert von drei Messungen bei einer Ammoniakkonzentration in der Abluft von 0,63 mg/m³. Mit herkömmlichen Einstreupellets wird eine Ammoniakkonzentration in der Abluft von im Mittel 38,5 mg/m³ und mit unbehandeltem Stroh 47,58 mg/m³ gemessen. Daraus ist ein Massenstrom von Ammoniak in der Abluft zu bei 14 Tagen Aufstallungszeit berechnen. Dieser Massenstrom wird angegeben in Gramm NH₃ pro Tier und pro Jahr. Bei behandelten Pellets beträgt dieser Massenstrom 0,14 g NH₃ pro Tier und Jahr, bei unbehandelten beträgt dieser Vergleichswert 27 g NH₃ pro Tier und Jahr.

**Tab. 1: NH₃-Konzentration in der Abluft am 14.10.2011**

| **Anlage** | Dr. Harnischmacher | | |
|---|---|---|---|
| **Messstelle** | Abluft Hähnchenmastanlage | | |
| Messtag | Messung Nr. | Uhrzeit von - bis | NH₃-Gehalt |
| | | | bei akt. 02 mg/m³ |
| 14.10.2011 | 11G17173.1 | 10:30 - 11:00 | 0,34 |
| 14.10.2011 | 11G17173.2 | 11:05 - 11:35 | 0,44 |
| 14.10.2011 | 11G17173.3 | 11:45 - 12:15 | 1,10 |
| **Minimum** | | | **0,34** |
| **Maximum** | | | **1,10** |
| **Mittelwert** | | | **0,63** |

Randbedingungen der Probenahme:
Abluftschacht:

| | |
|---|---|
| Datum: | 14.10.201 |
| Ablufttemperatur: | 1 17,2°C |
| Feuchte Abluft: | 99,9 % relativ |
| Abluftmenge: | direkte Messung nicht möglich, zu geringe Abgasgeschwindigkeiten |

**Tab. 2: NH₃-Konzentration in der Abluft Alter der Tiere: 14 Tage**

| Probennummer | Messdatum | Probenahmezeit | Seite/Ventilator/Streu | Probenvolumen m³ | Konzentr ation NH₃ | Einheit |
|---|---|---|---|---|---|---|
| 10G3534.1 | 12.04.2010 | 10:19 - 10:49 | Ostseite / 1 / Stroh | 0,0987 | 26,66 | mg/m³ |
| 10G3534.2 | 12.04.2010 | 11:05 - 11:35 | Ostseite / 1 / Stroh | 0,1006 | 41,08 | mg/m³ |
| 10G3534.3 | 12.04.2010 | 11:50 - 12:20 | Ostseite / 1 / Stroh | 0,1352 | 30,73 | mg/m³ |
| 10G3534.4 | 12.04.2010 | 10:21 - 10:51 | Ostseite / 1 / Stroh | 0,1135 | 119,20 | mg/m³ |
| 10G3534.5 | 12.04.2010 | 11:07 - 11:37 | Ostseite / 1 / Stroh | 0,1097 | 14,43 | mg/m³ |
| 10G3534.6 | 12.04.2010 | 11:52 - 12:22 | Ostseite / 1 / Stroh | 0,1058 | 51,65 | mg/m³ |
| 10G3534.7 | 12.04.2010 | 10:24 - 10:54 | Ostseite / 1 / Stroh | 0,0444 | 54,33 | mg/m³ |
| 10G3534.8 | 12.04.2010 | 11:09 - 11:39 | Ostseite / 1 / Stroh | 0,0559 | 63,76 | mg/m³ |
| 10G3534.9 | 12.04.2010 | 11:53 - 12:23 | Ostseite / 1 / Stroh | 0,0561 | 26,38 | mg/m³ |

| | | | **Mittelwert Einstreu mit Stroh:** | | **47,58** | |
|---|---|---|---|---|---|---|
| 10G3534.10 | 12.04.2010 | 13:01 - 13:31 | Westseite / 1 / Pellets | 0,1083 | 31,57 | mg/m³ |
| 10G3534.11 | 12.04.2010 | 13:45 - 14:15 | Westseite / 1 / Pellets | 0,1093 | 51,45 | mg/m³ |
| 10G3534.12 | 12.04.2010 | 14:27 - 14:57 | Westseite / 1 / Pellets | 0,1102 | 12,96 | mg/m³ |
| 10G3534.13 | 12.04.2010 | 13:03 - 13:33 | Westseite / 1 / Pellets Westseite / 1 / Pellets | 0,1068 | 55,44 | mg/m³ |
| 10G3534.14 | 12.04.2010 | 13:47 - 14:17 | Westseite / 1 / Pellets | 0,1039 | 21,22 | mg/m³ |
| 10G3534.15 | 12.04.2010 | 14:28 - 14:59 | Westseite / 1 / Pellets | 0,0442 | 53,95 | mg/m³ |
| 10G3534.16 | 12.04.2010 | 13:05 - 13:35 | Westseite / 1 / Pellets | 0,0641 | 27,66 | mg/m³ |
| 10G3534.17 | 12.04.2010 | 13:48 - 14:18 | Westseite / 1 / Pellets | 0,0665 | 67,18 | mg/m³ |
| 10G3534.18 | 12.04.2010 | 14:30 - 15:00 | Westseite / 1 / Pellets | 0,0672 | 25,05 | mg/m³ |

| | | | **Mittelwert Einstreu mit Pellets:** | | **38,50** | |
|---|---|---|---|---|---|---|
| 10G3534.19 | 12.04.2010 | Feldblindwert | | 0,0889 | < 0,10 | mg/m³ |

## Patentansprüche

1. Einstreupellets für Geflügelställe mit einem Zusatz eines die Ammoniakemission senkenden Salzes, wobei das Salz ausgewählt ist aus der Gruppe, die Dinatriummonohydrogenphosphat und Natriumpercarbonat umfasst.

2. Einstreupellets nach Anspruch 1, **dadurch gekennzeichnet, dass** das Salz Dinatriummonohydrogenphosphat ist und in einem Anteil von 1 Gew.% bis 10 Gew.% der Pelletmasse enthalten ist.

3. Einstreupellets nach Anspruch 1, **dadurch gekennzeichnet, dass** das Salz Natriumpercarbonat ist und in einem Anteil von 5 Gew.% bis 25 Gew.% der Pelletmasse enthalten ist.

4. Einstreupellets nach einem der vorhergehenden Ansprüche, **dadurch gekennzeichnet, dass** die Pellets mittels Druckluft in die Stallungen einbringbar sind.

5. Verfahren zur Herstellung von Einstreupellets nach einem der vorhergehenden Ansprüche, **dadurch gekennzeichnet, dass** die Masse nach Zugabe des Salzes ausschließlich bei Temperaturen von weniger als 30° C verarbeitet wird.
